# FASCICULE DE BREVET EUROPEEN

(11) **EP 0 420 738 B1**
(45) Date de publication et mention de la délivrance du brevet: **16.03.1994**
(21) Numéro de dépôt: 90402632.5
(22) Date de dépôt: 25.09.1990
(51) Int. Cl.: F16D 23/12, F16D 27/00, F16D 13/75

(54) **Timonerie de transmission de forces pour vehicules automobiles**
Gestänge zur Kraftübertragung für Kraftfahrzeuge
Transmission control linkwork for motor vehicles

(30) Priorité: 29.09.1989 FR 8912749
(43) Date de publication de la demande: 03.04.1991
(73) Titulaire: VALEO, 75848 Paris Cédex 17 (FR)
(72) Inventeur: Focqueur, Hervé, F-95130 Franconville (FR); Jumel, Bernard, F-75014 Paris (FR)
(74) Mandataire: Gamonal, Didier

(56) Documents cités:
- EP-A- 0 092 950
- EP-A- 0 224 454
- FR-A- 2 594 758
- FR-A- 2 616 501

## Description

La présente invention concerne les timoneries de transmission de forces pour véhicules automobiles propres à assurer une liaison entre un organe de commande et un organe de manoeuvre d'un dispositif débrayeur d'un embrayage, du genre comportant une partie mécanique.

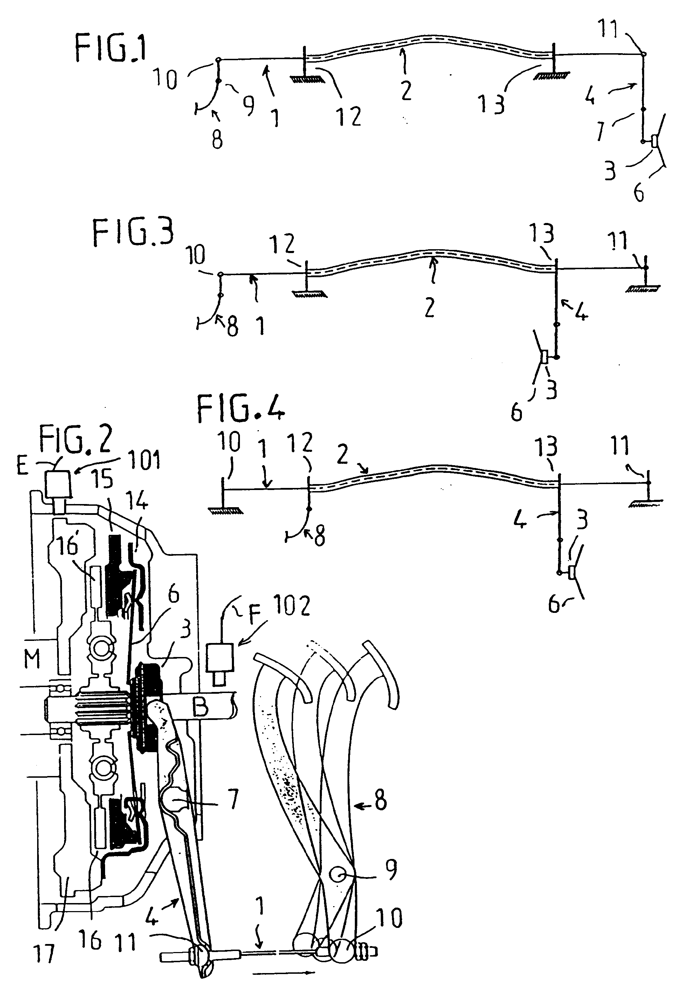

Usuellement (figures 1 et 2), la timonerie est dotée d'un câble 1 mobile axialement, d'une gaine 2 entourant ledit câble, et d'une fourchette 4 montée pivotante autour d'un point d'articulation 7, telle qu'une rotule solidaire d'une partie fixe du véhicule (figure 2) ou un axe tourillonnant et porté par une partie fixe du véhicule.

En variante le point d'articulation peut consister en des paliers, la fourchette portant alors des tétons tourillonnants dans lesdits paliers implantés, par exemple, dans le carter de la boîte de vitesses.

D'une manière générale le point d'articulation 7 constitue un point de guidage pour la timonerie.

L'organe de manoeuvre est une butée de débrayage 3 soumise à l'action d'une fourchette de débrayage 4 propre à agir sur le dispositif débrayeur d'un embrayage tel que les extrémités des doigts d'un diaphragme 6 ou des leviers de débrayage.

L'organe de commande 8 est le plus souvent une pédale montée pivotante autour d'un point d'articulation 9 solidaire également d'une partie fixe du véhicule.

Le câble 1 est accroché à chacune de ses extrémités 10 et 11 à des points d'accrochage appartenant respectivement à la pédale 8 et à la fourchette 4, tandis que la gaine 2 est interposée entre deux points fixes 12 et 13 solidaires du véhicule.

Les points d'articulation ainsi que les points fixes constituent des points dénommés ci-après "points d'appui" pour la timonerie, qui peut comporter une partie hydraulique, par exemple entre la fourchette 4 et la butée 3. Ces points d'appui ont comme caractéristique d'être portés par une partie fixe du véhicule en étant solidaires de ladite partie ou montés tourillonnants par rapport à celle-ci.

Bien entendu, la présence de la fourchette 4 n'est pas obligatoire, le point 11 pouvant être attelé à un disque, comme décrit dans le brevet FR-A-1 587 732 ou un organe menant, comme décrit dans le document EP-A-0 322 265.

A la figure 1, en appuyant sur la pédale 8 on tire sur le câble 1, guidé par la gaine 2, pour manoeuvrer la fourchette 4.

Bien entendu, figure 3 le point 11 peut être fixe, tandis que le point 13 peut être mobile en étant attelé à la fourchette 4, une variation de position du point 10 entraînant une variation de position du point 13.

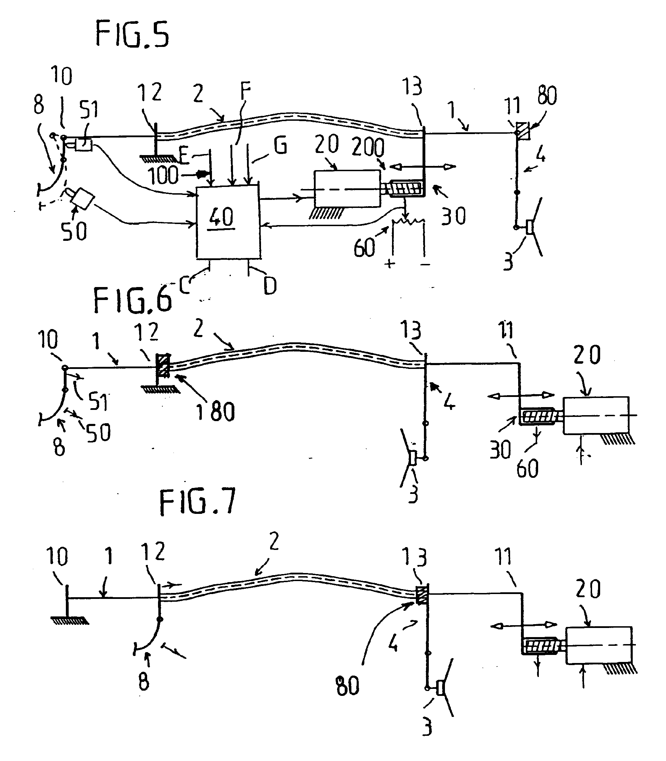

En variante (figure 4) les points 10 et 11 peuvent être fixes et les points 12 et 13 mobiles en étant attelés respectivement à la pédale 8 et à la fourchette 4, le câble 1 servant de guide à la gaine 2, qui est alors mobile axialement.

Dans tous les cas l'un des éléments gaine-câble constitue un élément de transmission de force, tandis que l'autre élément câble-gaine constitue un élément de guidage.

En variante, la timonerie peut comporter un élément de transmission de force en plusieurs parties avec des tringles avec un système de renvoi et au moins un point d'articulation porté par une partie fixe du véhicule, ledit point d'articulation constituant un point de guidage pour la timonerie.

En pratique, la course de l'organe de commande 8 et de manoeuvre 3 se décompose en une course morte, en une course de modulation avec glissement et en une course finale pour un bon accouplement.

Par exemple (figure 2), dans le cas d'un embrayage classique à disque de friction 16, la course morte se produit entre la position de débrayage, disque de friction libéré, et une position intermédiaire, dite position d'accostage, dans laquelle les garnitures de friction 16′ du disque 16 viennent lécher le plateau de pression 15.

La course de modulation se produit avec un glissement circonférentiel desdites garnitures 16′ entre le plateau de réaction 17 et le plateau de pression 15 de l'embrayage et avec une transmission de couple de plus en plus complète jusqu'à une position d'accouplement complet, dit de couplage. La course finale permet un bon accouplement entre l'arbre menant M solidaire en rotation du moteur du véhicule et l'arbre mené B (l'arbre d'entrée de la boîte de vitesses).

Ainsi, la course de modulation est utile pour le confort du passager et pour les manoeuvres du véhicule, tandis que la course morte est nécessaire compte tenu des tolérances de fabrication des divers composants de l'embrayage ainsi que des voilages, et notamment de la mise en cône du plateau de pression 15 sous l'effet des sollicitations thermiques dont il est l'objet.

Pour mémoire, on signalera que le plateau de pression 15 est solidaire en rotation d'un couvercle 14 en étant mobile axialement par rapport à celui-ci. Ledit couvercle 14 est propre à être rapporté sur le plateau de réaction 17, tandis que le diaphragme 6 s'appuie sur le couvercle 14 pour action sur le plateau de pression 15 et sollicitation de celui-ci en direction du plateau de réaction 17 pour serrage des garnitures de friction 16′ entre lesdits plateaux 15 et 17. Le plateau de réaction 17 est solidaire de l'arbre moteur M tandis que le disque 16 est solidaire en rotation de l'arbre secondaire mené B.

Lorsque lesdites garnitures 16′ s'usent, l'épaisseur de celles-ci varie, de sorte que le diaphragme 6 s'incline et déplace la butée 3, laquelle, par action sur la fourchette 4, tire indirectement sur le câble 1. Si aucune disposition particulière n'est prise, il en résulte diaphragme 6 s'incline et déplace la butée 3, laquelle, par action sur la fourchette 4, tire indirectement sur le câble 1. Si aucune disposition particulière n'est prise, il en résulte à longueur de timonerie constante, notamment l'apparition intempestive d'un jeu générateur de patinage au niveau des garnitures 16', ce qui est nuisible pour la durée de vie de l'embrayage.

Pour pallier ces inconvénients, on a déjà proposé dans le document FR-A-2 420 164 de fractionner le câble de la tringlerie en deux tronçons successifs, le premier lié à la fourchette de débrayage et le deuxième à la pédale de commande.

Un dispositif compensateur est en outre prévu, celui-ci comportant deux pièces d'accouplement, qui sont télescopiquement mobiles axialement l'une par rapport à l'autre, et qui, chacune respectivement, sont adaptées à être liées en mouvement aux tronçons du câble en coopération avec des moyens de verrouillage débrayables propres à lier temporairement entre elles, lesdites pièces d'accouplement, pour un sens axial d'action seulement de celles-ci.

Une telle disposition nécessite donc de couper le câble en deux et est sujette aux usures, du fait de l'intervention des moyens de verrouillage débrayables à chaque intervention du conducteur sur l'organe de commande.

Dans le document FR-A-2 594 758, selon le préambule de la revendication 1, on a proposé une timonerie de transmission comportant des moyens moteurs et une partie mécanique. Un calculateur est prévu pour piloter la mise en route des moyens moteurs en fonction d'une information provenant d'un détecteur de contrainte dans l'élément de transmission de force. Les moyens moteurs n'interviennent que lorsque l'utilisateur exerce une action sur l'élément de transmission de force et ce à partir d'un certain seuil d'effort. On ne peut donc pas effectuer une compensation de l'usure des garnitures de friction avec mise à longueur correspondante de la timonerie.

La présente invention a pour objet une nouvelle timonerie, qui, tout en comportant une partie mécanique actionnée manuellement par le conducteur permette de manière simple et économique d'effectuer, avec un minimum de phénomènes d'usure, une modification de la longueur de la timonerie tenant compte de l'usure des garnitures de friction, tout en procurant d'autres avantages.

Le problème est résolu, selon l'invention, par la partie caractéristique de la revendication 1.

Grâce à l'invention, il est possible d'effectuer le rattrapage d'usure à des instants privilégiés, par exemple à l'arrêt du moteur ou lors du passage de la marche arrière.

On appréciera que l'élément de transmission de force n'a pas besoin d'être coupé en deux.

Tout ceci permet de minimiser les phénomènes d'usure.

Le point d'appui mobile peut être mobile indirectement, dans ce cas il suffit de couper la gaine ou le câble, suivant les configurations, et de déplacer le point de coupure mais on appréciera que dans tous les cas c'est la partie qui sert uniquement au guidage et non à la transmission d'effort qui est coupée en deux.

On appréciera que la course définie de l'organe mobile est donc évolutive en fonction des usures des garnitures de friction et que la timonerie selon l'invention peut se monter en lieu et place d'une timonerie classique tout en conservant le maximum de pièces de celle-ci.

On notera également que les moyens de commande sont simplifiés par rapport à une timonerie automatisée telle celle décrite dans le document FR-A-2 564 920.

Suivant une caractéristique, il peut être adjoint à la timonerie un capteur de position libre détectant la position libre de l'organe de commande, (ladite position libre correspondant à une absence d'action manuelle du conducteur sur l'organe de commande) de sorte que le rattrapage d'usure ne s'effectue que lorsque ledit organe de commande est en position libre.

Bien entendu grâce au calculateur électronique on peut choisir d'autres critères d'intervention du rattrapage d'usure, celui-ci pouvant ne s'effectuer que lorsque l'on passe la marche arrière, un capteur étant alors associé au levier de changement de vitesses pour n'autoriser le rattrapage d'usure que dans la position marche arrière dudit levier.

Les moyens moteurs peuvent être alimentés en permanence mais avantageusement les moyens de commande sont irréversibles, en sorte que les moyens moteurs n'ont pas besoin d'être alimentés en permanence et que le point d'appui mobile reste fixe lorsque le conducteur agit sur l'organe de commande en dehors du moment où doit se produire le rattrapage d'usure.

Suivant une autre caractéristique on peut tirer parti des moyens moteurs pour effectuer principalement à l'aide de ceux-ci la course morte, tout en ayant pour le conducteur la possibilité d'effectuer manuellement la course de modulation ainsi qu'une faible partie de la course morte pour des raisons de sécurité en cas de panne des moyens moteur.

Pour cela il suffit d'associer au moins un capteur de position d'actionnement à l'organe de commande, ledit calculateur recevant les informations dudit capteur de position pour commander lesdits moyens moteurs, de sorte que par enfoncement ou relâchement de l'organe de commande par le conducteur et donc action de l'organe de commande sur son capteur de position associé, le calculateur pilote la mise en route des moyens moteurs pour déplacement dudit point d'appui mobile d'une de ses positions limites à l'autre, dans un premier sens ou dans un deuxième sens suivant l'action exerçée par le conducteur sur l'organe de commande, jusqu'à une position de fin de course, ledit point d'appui mobile étant fixe par l'intermédiaire des moyens de commande lorsque le conducteur actionne manuellement l'organe de commande sans action sur ledit capteur de position d'actionnement.

On appréciera que l'invention permet de résoudre à course sensiblement constante de l'organe de commande deux exigences contradictoires, à savoir une augmentation de la course de modulation, sans diminution de la course morte, et que le point d'appui concerné est mobile dans les deux sens suivant une course définie entre deux positions limites.

Il devient également possible, grâce à un capteur de position libre détectant la position libre de l'organe de commande, ainsi qu'à des capteurs détectant au moins un paramètre de fonctionnement de la transmission du véhicule allant du moteur aux roues de celui-ci, tel que le glissement du disque de friction et/ou des vitesses de rotation prédéterminées, suivant une caractéristique importante de l'invention, de faire intervenir les moyens moteurs pour faire patiner le disque de friction sans que le conducteur n'ait à intervenir sur la pédale. Un glissement contrôlé des garnitures de friction 16′ du disque 16 entre les plateaux de pression et de réaction est ainsi obtenu, ledit glissement permettant d'écrêter notamment les surcouples instantanés du moteur, ce qui améliore la durée de vie des organes de transmission, diminue les bruits et évite les à-coups au bénéfice du confort de l'usager.

La présente invention permet donc également de moduler la course finale et/ou la course de modulation à l'aide des moyens moteurs.

Les caractéristiques et avantages de l'invention ressortiront de la description qui va suivre, à titre d'exemple, en référence aux dessins annexés dans lesquels :
- la figure 1 est une vue schématique d'une timonerie de l'Art Antérieur pour une première variante de réalisation;
- la figure 2 est une vue schématique d'un embrayage à friction associé à la timonerie de la figure 1;
- les figures 3 et 4 sont des vues analogues à la figure 1 pour d'autres variantes de réalisation;
- la figure 5 est une vue schématique de la timonerie, analogue à la figure 1, pour un premier exemple de réalisation selon l'invention;
- les figures 6 à 10 sont des vues analogues à la figure 5 pour d'autres variantes de réalisation, sans représentation du calculateur pour les figures 6 à 9;
- la figure 11 est une vue de face des moyens moteurs avec leur transmission irréversible associée pour un premier mode de réalisation;
- la figure 12 est une vue en coupe selon la ligne 1-1 de la figure 11, le moteur électrique n'étant pas coupé;
- les figures 13 et 14 sont des vues analogues aux figures 11 et 12 pour un second mode de réalisation, la figure 14 étant une vue en coupe selon la ligne 2-2 de la figure 13.

Dans les figures 5 à 14, les éléments identiques à ceux décrits en référence aux figures 1 à 4 de l'Art Antérieur seront affectés du même signe de référence, les points d'appui étant des points portés par une partie fixe du véhicule automobile à moteur à combustion interne.

A la figure 5, on voit que la timonerie, selon l'invention, comporte un point d'appui 13 directement mobile dans les deux sens suivant une course définie entre deux positions limites et sous l'action de moyens de commande 200 irréversibles, comportant des moyens moteurs 20 et une transmission 30 intervenant entre lesdits moyens moteurs 20 et le point d'appui mobile 13. Des capteurs de position d'actionnement 50,60 sont associés respectivement à l'organe de commande 8 et au point d'appui mobile 13. Un calculateur électronique 40 est prévu, ledit calculateur recevant les informations desdits capteurs de position 50,60 pour commander lesdits moyens moteurs 20. Par enfoncement ou relâchement de l'organe de commande 8 par le conducteur et donc action de l'organe de commande 8 sur son capteur de position associé 50, le calculateur 40 pilote la mise en route des moyens moteurs 20 pour déplacement du point d'appui mobile (et donc de l'organe de manoeuvre 3) dans un premier sens ou dans un deuxième sens, d'une de ses positions limites à l'autre, suivant l'action exerçée par le conducteur sur l'organe de commande 8, jusqu'à une position de fin de course. Ici, cette position est détectée par le capteur de position 60 associé au point d'appui mobile 13. Sous l'action de l'organe de commande 8 actionné manuellement par le conducteur, lorsque le capteur de position d'actionnement 50 associé audit organe 8 n'émet pas de signal capable, par l'intermédiaire du calculateur 40, d'engendrer la mise en route des moyens moteurs 20, le point d'appui mobile 13 reste fixe par l'intermédiaire des moyens de commande irréversibles 200.

La présence du capteur associé au point mobile n'est pas indispensable. En effet, le calculateur peut être programmé afin de générer un signal de consigne de position pour les moyens moteurs en réponse à un signal de commande produit par le capteur associé à l'organe de commande, en sorte de déplacer le point mobile d'une de ses positions limites à l'autre.

Par exemple, les moyens moteur peuvent consister en un moteur électrique à commande pas-à-pas, déplacer d'une position extrème, correspondant à l'une des positons limites du point mobile, à une autre position extrème, correspondant à l'autre position limite du point mobile, par un nombre déterminé d'impulsions de largeur prédéterminée générées par le calculateur en réponse au signal de commande du capteur associé.

La mémorisation des positions extrèmes, grâce à un capteur d'usure décrit ci-après, tient compte alors des usures, notamment des garnitures de friction, les impulsions étant évolutives en fonction des usures.

Dans tous les cas, une course du point mobile entraîne une course de l'organe de manoeuvre et la course morte est effectuée principalement par les moyens moteur et la course de modulation par le conducteur qui, pour des raisons de sécurité, effectue une faible partie de la course morte.

Suivant l'invention un capteur d'usure 80 pour détecter une contrainte supplémentaire dans la timonerie est prévu en association avec le point d'appui mobile et le calculateur, lequel reçoit les informations dudit capteur de détection de contrainte supplémnentaire 80 pour commander lesdits moyens moteurs 20, de sorte que ledit capteur envoie un signal au calculateur, lorsqu'une telle dite contrainte est présente pour mettre en route lesdits moyens moteurs et déplacer le point d'appui mobile, en sorte de réaliser un rattrapage d'usure. Le déplacement du point mobile entraîne un déplacement de l'organe de manoeuvre 3.

Les moyens moteurs 20 et la transmission 30 appartiennent donc à des moyens de commande pilotés par des moyens de pilotage comportant le calculateur 40 et le capteur 80 formant un moyen de détection.

Les moyens moteurs 20 peuvent être alimentés en permanence et maintenir fixe le point mobile 13 en dehors des rattrapages d'usure mais avantageusement les moyens de commande 200 sont irréversibles.

A la figure 5 la transmission 30, comme dans les figures 12 à 14 décrites ci-après est irréversible.

Le capteur 80 est associé au point 11 (voir également figure 12) et c'est le point d'appui 13 associé à l'une des extrémités de la gaine 2 qui est mobile, le capteur de position d'actionnement 50 étant un switch détectant la position de fin de course de la pédale, tandis que le capteur 60 associé au point d'appui mobile 13 est un potentiomètre dont le point milieu est relié au calculateur 40. Ce calculateur 40 a des entrées C et D pour son alimentation et reçoit des signaux E,F,G provenant de capteurs 101,102 (voir figure 2 pour les signaux E,F) mesurant ou détectant respectivement la vitesse de rotation du plateau de réaction 17 et donc de l'arbre menant M, la vitesse de rotation de l'arbre B, et un paramètre lié à l'accélération du véhicule, telle que la position du papillon du carburateur ou la position de la pédale d'accélérateur. Ce calculateur 40 reçoit les signaux provenant des capteurs 50 et 60 ainsi que le signal provenant d'un capteur de position libre 51 détectant la position libre de la pédale 8 (pédale non actionnée par le conducteur). Le capteur 51 est à la figure 5 un switch ou un interrupteur.

Ainsi, lorsque le conducteur actionne manuellement la pédale 8, tant que le switch 50 n'est pas actionné par la pédale 8, une modulation du couple d'embrayage est possible manuellement, le disque de friction 16 passant alors progressivement de l'état engagé (garnitures 16′ serrées entre les plateaux 15,17) à l'état libéré et vice-versa, tandis que le point 13 reste fixe grâce à l'irréversibilité de la transmission 30.

Lorsque le conducteur enfonce la pédale de débrayage 8, laquelle en fin de course actionne le switch 50 (pédale enfoncée), le calculateur 40 reçoit une information du capteur 50 et pilote la mise en route des moyens moteurs 20, lesquels entraînent un déplacement du point d'appui mobile 13 et de l'organe 3 dans un premier sens jusqu'à une première position extrême (ou limite) detéctée par le potentiomètre 60, pour effectuer la course morte de l'embrayage dans un premier sens. Le potentiomètre répère, de préférence, la positon d'un palpeur porté par la transmission des moyens de commande.

Lorsque le conducteur relâche alors son action sur la pédale, celle-ci remonte et le switch 50 retourne dans sa position initiale, ce qui est pris en compte par le calculateur 40 pour actionner les moyens moteurs en sens inverse et effectuer une course en sens inverse du point mobile 13, jusqu'à une deuxième position extrême (ou limite) détectée par le potentiomètre 60.

Par exemple, les moyens de commande 200 (figure 5) peuvent comporter un palpeur porté par une pièce entraînée par l'arbre de sortie des moyens moteur, ledit palpeur consistant en un curseur coopérant avec le potentiomètre 60, ledit palpeur étant adapté à arrêter les moyens moteur 20 lorsqu'il atteint l'une quelconque des deux bornes du potentiomètre 60, comme décrit dans le document FR-A-2530757.

Le point d'appui 13 est mobile ainsi dans les deux sens suivant une course définie entre deux positions limites déterminées par le potentiomètre 60 ou, en variante, par le calculateur.

Lorsque la pédale est en position relevée ou libre, le capteur 51 envoie une information au calculateur 40, lequel entraîne la mise en route des moyens moteurs 20 lorsque, par son entrée G associée à un capteur détectant une accélération du véhicule, tel qu'un capteur repérant la position du papillon du carburateur ou un accéléromètre, il détecte par exemple des variations d'accélération importantes, afin de desserrer et faire patiner l'embrayage (glissement des garnitures de friction 16′ entre les plateaux 15,17) pour, notamment, un bon confort de l'usager. Grâce aux capteurs E et F il devient possible, selon une cartographie pré-établie, de faire glisser l'embrayage (les garnitures 16′) dans une plage déterminée pour réduire les bruits.

Lorsque la pédale 8 est libre une traction supplémentaire est détectée par le capteur 80, lequel envoie une information au calculateur 40, qui pilote la mise en route des moyens moteurs jusqu'à obtention d'un effort résiduel nul, pour rattrapage d'usure.

On notera que cette traction supplémentaire est due aux garnitures de friction 16′ qui en s'usant engendre une modification de l'inclinaison du diaphragme 6 et de la fourchette 4, laquelle tire sur la câble 1.

On appréciera que le câble 1 de transmission d'effort n'est pas coupé.

Il en est de même à la figure 6, dans laquelle c'est le point extrême 11 du câble 1 qui est mobile, et il en est de même à la figure 7.

Dans ces figures la jauge de contrainte 180 est associée à la gaine 2 et détecte une modification de contrainte de celle-ci, la jauge 80 pouvant être associée au point 12 (figure 6) ou au point 13 (figure 7).

D'une manière générale de préférence à une jauge de contrainte on utilise de préférence comme capteur un capteur comportant un switch maintenu dans l'une de ses positions par un ressort de rappel ou en variante un bloc en matériau élastomère comportant des lames de contact, lesdites lames établissant un circuit lorsque le bloc est déformé au-delà d'une certaine valeur. Il en est de même pour le switch une déformation provoquant la fermeture de celui-ci.

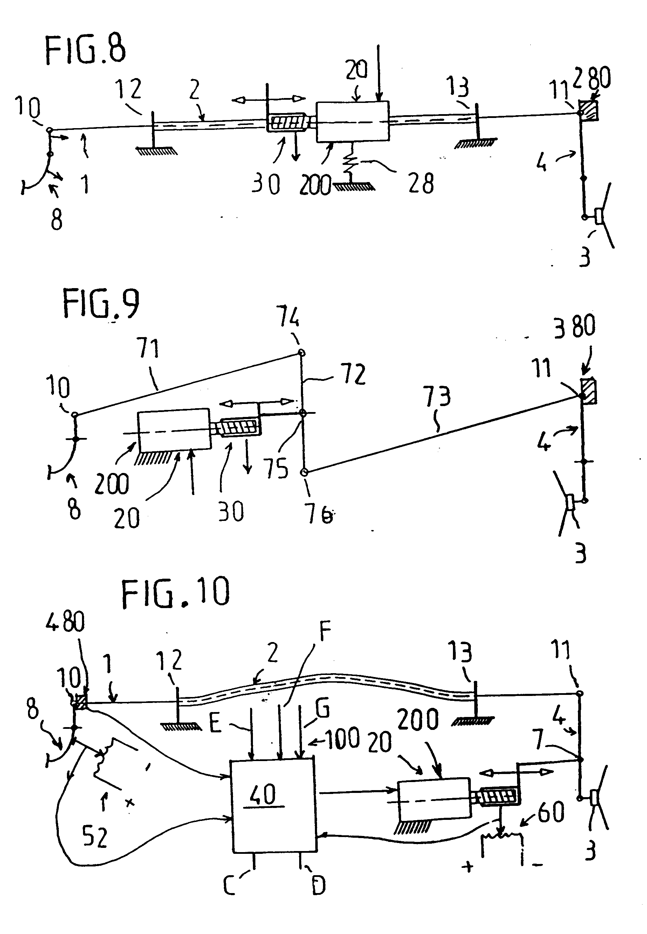

A la figure 8, la gaine 2 de guidage est coupée en deux entre les deux points d'appui fixes 12 et 13 et c'est ce point de coupure qui est mobile, sachant qu'une déformation de la gaine 2 entraîne une variation de position relative des points 10 et 11. Cette disposition revient à déplacer indirectement les points mobiles 12,13, car une mobilité du point de coupure entraîne de la même manière qu'à la figure 5 une variation des positions relatives des points 10,11, la seule différence étant que la gaine 2 de guidage est coupée.

Dans ce cas le capteur 280 est associé, comme à la figure 5 au point 11.

On appréciera que c'est la partie qui sert au guidage qui est coupée en deux, le câble 1 ou la gaine 2 de transmission d'effort restant intact.

Bien entendu le boîtier des moyens moteurs 20 est relié élastiquement par exemple par un ressort 28 à une partie fixe du véhicule pour permettre de suivre les variations de la gaine 2, ledit boîtier constituant avantageusement également un boîtier pour la transmission irréversible. Les moyens de commande 200 sont donc monoblocs.

A la figure 9, le capteur 380 est associé au point 11 et la timonerie comporte des tringles 71,72,73 avec des points d'articulation 74,75,76 entre les extrémités 10 et 11 de la tringlerie, et c'est le point d'articulation 75, solidaire d'une partie fixe du véhicule et formant point de guidage pour la timonerie, qui est mobile. L'élément de transmission de force est donc en plusieurs parties (les tringles).

A la figure 10, c'est le point d'articulation 7 de la fourchette 4 formant point de guidage pour la timonerie, qui est mobile.

On notera que dans cette figure les deux capteurs 50 et 51 ont été remplacés par un potentiomètre 52 qui détecte les positions libres et d'enfoncement de la pédale 8.

On appréciera que le capteur 80 est associé au point 10, celui-ci détectant l'effort de traction sur le câble lorsque les garnitures de friction 16′ s'usent. Ce capteur 80, disposé dans la timonerie, détecte la présence ou non d'un effort dans la timonerie.

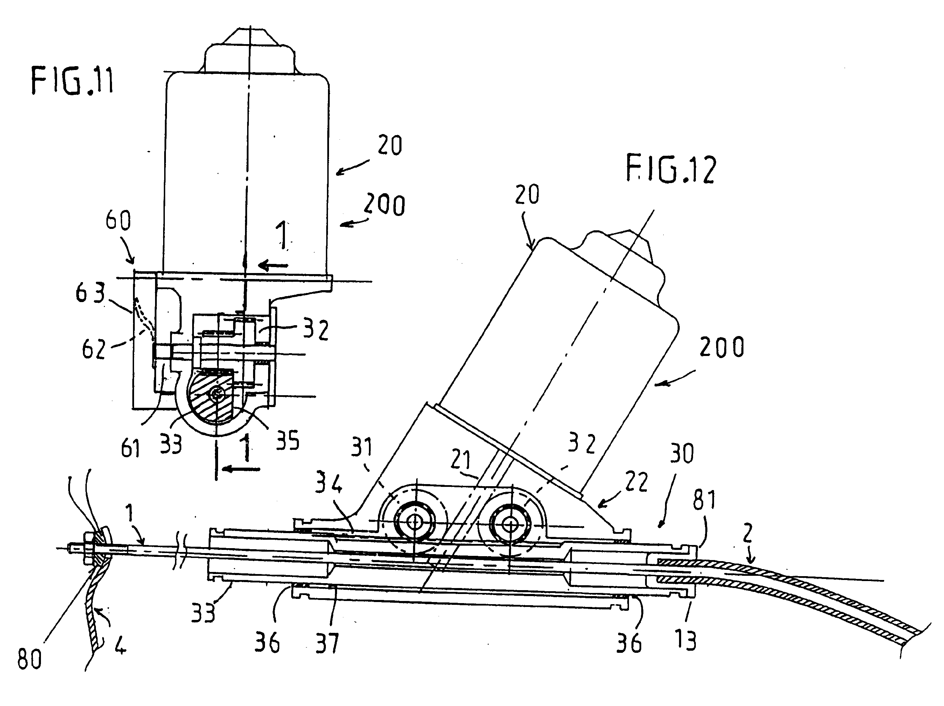

Dans la réalisation des figures 11 et 12, on voit que ledit capteur 80 est interposé entre l'extrémité supérieure de la fourchette 4 et un écrou de fixation du câble 1. Bien entendu, il peut détecter un effort sur la gaine, en étant associé au point 12 ou 13.

Pour mémoire, on rappellera que lorsque les garnitures de friction 16′ s'usent, l'épaisseur de celles-ci varie de sorte que le diaphragme 6, monté dans l'exemple de la figure 2 de manière pivotante sur le couvercle 14, la butée 3 agissant en poussée, s'incline et déplace la butée 3 laquelle, par action sur la pédale 4, tire indirectement sur le câble 1. Lorsque la pédale 8 est libre, un ressort rappelant usuellement la pédale 8 dans cette direction, c'est cette traction qui est détectée par le capteur 80, lequel envoie une information au calculateur 40, qui pilote la mise en route des moyens moteurs 20 jusqu'à obtention d'un effort résiduel nul. Le calculateur peut effectuer cette opération lors de situations programmées, par exemple mise en route ou arrêt du moteur du véhicule.

On notera qu'en position libre la pédale 8 n'est pas actionnée par le conducteur.

Dans ces figures 11 et 12, les moyens moteurs consistent en un moteur électrique et la transmission comporte des pignons intermédiaires 31,32 engrènant avec une vis sans fin 21 entraînée par le moteur électrique 20, comme décrit dans le document FR-A-2 372 998.

Cette vis sans fin comporte deux portions avec des pas de sens différent, chacune desdites portions engrènant avec l'un des pignons. Chaque pignon 31,32 est double et comporte une partie propre à engrener avec une crémaillère 34 ménagée dans un coulisseau 33.

Le moteur électrique 20 et la transmission irréversible 30, que constitue la vis sans fin 21 avec ses deux pignons 31,32 engrènant avec la crémaillère 34, sont logés dans un même boîtier 22, le coulisseau 33 étant mobile en translation et traversant un alésage 37 dudit boîtier 22 avec intervention de bagues de guidage 36.

Le câble 1 passe à l'intérieur du coulisseau 33. Ce coulisseau présente, à l'une de ses extrémités axiales, une coupelle 81 épaulée ou embout à section globalement en forme de U avec des extrémités radiales formant épaulement pour appui sur le boîtier 22. Cette coupelle reçoit l'extrémité de la gaine 2 en étant solidaire, par exemple, par emmanchement à force du coulisseau 33. En variante, elle peut être d'un seul tenant avec le coulisseau.

On notera que le coulisseau 33 est doté d'un méplat pour passage des pignons 31 et 32.

Le pignon 32 a son axe prolongé en 61 pour entraînement d'un bras 62, formant le curseur d'un potentiomètre 60 logé dans un boîtier 63 solidaire du boîtier 22. Ainsi, lorsque le moteur électrique 20 est entraîné, la vis sans fin tourne dans un sens et entraîne les pignons 31, 32 qui, à leur tour, déplacent la crémaillère 34 et donc la coupelle 81 et la gaine 2, jusqu'à ce que le bras 62 atteigne une position extrême. Un mouvement en sens inverse est alors possible à partir de cette position, jusqu'à ce que le bras 62 atteigne la deuxième position extrême du potentiomètre 60.

Dans ce mode de réalisation, c'est le point 13 qui est mobile.

On notera que lorsque la pédale 8 tire sur le câble, la gaine 2 ne peut être entraînée, du fait de l'irréversibilité de la transmission 30 et de la non-alimentation du moteur 20. Par contre, le coulisseau 33 peut se déplacer dans les deux sens par l'intermédiaire du moteur électrique 20.

Par déplacement du point mobile, on fait varier la courbure de la gaine 2, ce qui a pour effet de faire pivoter la fourchette 4 et de déplacer l'organe de manoeuvre, le potentiomètre 60 détectant la fin de course du point 13, ce qui a pour effet d'envoyer un signal au calculateur 40, lequel arrête le moteur électrique 20, celui-ci n'étant plus alors alimenté. Au réembrayage le potentiomètre permet, au point d'appui mobile 13, de retrouver sa position initiale pour permettre la course de modulation par le conducteur. Cette position de fin et de début de course est mémorisée par le calculateur 40 à chaque rattrapage d'usure pour déplacer de manière évolutive les positions limites du point mobile 13.

On peut également utiliser une disposition du type de celle décrite dans le sus-mentionné document FR-A-2530757.

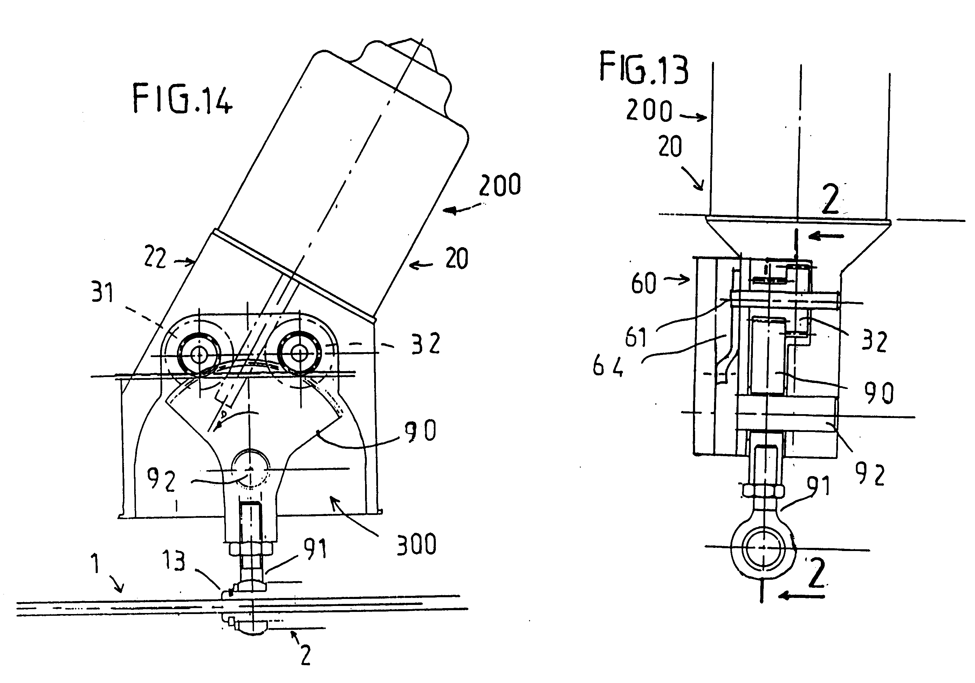

Dans les figures 13 et 14, les moyens moteurs 20 sont également électriques, mais la transmission 300 irréversible, au lieu de présenter une crémaillère 34 et un coulisseau 33, est dotée d'un secteur denté 90 engrènant avec les pignons 31,32 et montée autour d'un point d'articulation 92 solidaire du boîtier fixe 22.

Par rotation des pignons 31,32, le secteur 90 pivote, ce qui a pour effet de déplacer le point 13 rapporté par liaison du type à rotule 91 sur l'extrémité inférieure du secteur 90.

Ainsi qu'il ressort à l'évidence de la description, les moyens moteurs 20 et la transmission irréversible associée 30,300 forment des moyens de commande agissant sur la timonerie, tandis que le calculateur 40 et les différents capteurs 50,60 ; 51,52,80 forment des moyens de pilotage desdits moyens de commande.

Le capteur 80 peut être associé à l'élément de guidage mais de préférence ce capteur est associé à un point d'appui de l'élément de transmission de force ou à un point d'articulation et de guidage, tandis que le point mobile est associé à l'élément de guidage ou à un point d'articulation et de guidage.

Avantageusement pour une meilleure précision le capteur 80 est associé à l'élément de transmission de force.

Bien entendu, la présente invention n'est pas limitée aux exemples de réalisation décrits, mais englobe toutes variantes d'exécution, en particulier les moyens moteurs peuvent être du type hydraulique, le calculateur 40 pilotant alors une pompe électrique, laquelle fait varier la pression à l'intérieur d'une chambre définie par un cylindre et un piston, ce qui a pour effet de déplacer le piston, et donc un point mobile de la timonerie.

De même, la transmission irréversible peut comporter un moteur électrique doté d'une vis engrènant avec une démultiplication à engrenages dotée de pignons, l'un des pignons de l'engrenage comportant une rainure en spirale, dans laquelle pénètre un têton solidaire de l'une des extrémités d'un levier pivotant, dont l'autre extrémité comporte également un têton en prise avec le filetage d'une pièce mobile monté dans un alésage du boîtier.

Par rotation du moteur, on fait pivoter le levier, lequel entraîne ladite pièce mobile, portant l'un des points d'appui de la timonerie, par exemple l'une des extrémités de la gaine 2, ladite pièce étant traversée par le câble 1.

Les moyens moteurs 20 peuvent être irréversibles, grâce par exemple à la présence de champs magnétiques ou en variante par l'intermédiaire d'un frein agissant par exemple sur l'arbre de sortie du moteur.

Bien entendu, comme mentionné ci-dessus, la présence d'une fourchette n'est pas indispensable dans la timonerie, et celle-ci peut comporter une partie hydraulique.

Par exemple à la figure 9 le point 11 peut être lié à un disque monté tourillonnant sur une partie fixe du véhicule, ledit disque appartenant à un système bielle-manivelle entraînant une bielle attelée au piston d'un cylindre émetteur relié par une canalisation à un cylindre récepteur actionnant la fourchette de débrayage.

L'organe de commande peut être une manette ou poignée, par exemple pour motos à la disposition du conducteur.

Les points 10 et 12 peuvent être mobiles. Par exemple à la figure 5 il suffit de déplacer le point 12 au lieu du point 13 et à la figure 7 de déplacer le point 10 au lieu du point 11.

Le potentiomètre 60 peut être remplacé par deux switchs respectivement de début et de fin de course. Au lieu d'un potentiomètre, on peut utiliser une partie rotative entraînée par les moyens moteur pour ouvrir et fermer des contacts et arrêter les moyens moteur.

Le moteur électrique peut tourner dans un seul sens et son arbre de sortie ou axe 21 peut être relié mécaniquement par une démultiplication à engrenage irréversible dotée de pignons, à un entraîneur coopérant avec un ergot transversal porté par un coulisseau, ledit entraîneur comportant deux saillies périphériques sensiblement en forme de section d'hélice, qui sont inclinées en sens inverse par rapport à l'axe 2 de l'entraîneur, lesdites saillies étant en outre décalées axialement et angulairement l'une par rapport à l'autre.

Par exemple dans les figures 6 et 7 on peut rendre indirectement mobile le point (ou le point 10) en coupant le câble 1 en deux et en déplaçant le point de coupure de manière analogue à la figure 8, étant entendu que dans tous les cas l'un seulement des éléments câble 1-gaine 2 est coupé (à savoir celui formant élément de guidage), le boîtier 22 étant suspendu élastiquement, comme dans la figure 8.

Enfin au lieu d'autoriser le rattrapage d'usure qu'en position libre de la pédale, on peut utiliser celui-ci sur d'autres critères, par exemple il peut être adjoint au levier de changement de vitesses un capteur détectant la position de marche arrière dudit levier, une information étant alors envoyée au calculateur 80 pour autoriser le rattrapage d'usure dans cette position.

De préférence on tire parti du capteur, que présente usuellement le véhicule pour allumer les feux de recul lorsque le conducteur passe la marche arrière.

## Revendications

1. Timonerie de transmission de forces pour véhicules automobiles, propre à assurer une liaison entre un organe de commande (8) et un organe de manoeuvre (3) d'un dispositif débrayeur d'un embrayage, du genre comportant des moyens moteurs (20), une partie mécanique avec au moins un élément de transmission de force et des points d'appui (7,11,12,13) portés par une partie fixe du véhicule automobile, dans laquelle, d'une part, l'organe de manoeuvre (3) est associé à un embrayage à friction comportant un disque de friction (16) avec des garnitures de friction (16') propres à être serrées entre le plateau de pression (15) et le plateau de réaction (17) que comporte ledit embrayage et, d'autre part, un calculateur (40) est prévu pour piloter la mise en route des moyens moteurs (20) en fonction d'une information provenant d'un détecteur de contrainte (80) dans l'élément de transmission de force, caractérisée en ce que l'un desdits points d'appui (7,11,12,13) de la timonerie est directement ou indirectement mobile sous l'action de moyens de commande (200) comportant les moyens moteurs (20) et une transmission (30,300) intervenant entre lesdits moyens moteurs (20) et ledit point d'appui mobile, en ce que ledit capteur (80) est un capteur d'usure prévu pour détecter une contrainte supplémentaire dans la timonerie, ledit calculateur (40) recevant les informations dudit capteur d'usure (80) pour commander lesdits moyens moteurs (20) et en ce que l'élément de transmission de force est distinct de ladite transmission de sorte que ledit capteur (80) envoie un signal au calculateur (40), lorsqu'une telle contrainte supplémentaire dans la timonerie est détectée par le capteur d'usure (80), pour mettre en route lesdits moyens moteurs (20) et déplacer le point d'appui mobile (7,11,12,13), pour réaliser un rattrapage d'usure.

2. Timonerie selon la revendication 1, caractérisée en ce qu'un capteur de position libre (51,52) est prévu pour détecter la position libre de l'organe de commande (8) lorsque le conducteur n'exerce pas d'action manuelle sur l'organe de commande, de sorte que ledit capteur (51,52) envoie un signal au calculateur (40) pour, en position libre de l'organe de commande, mettre en route lesdits moyens moteurs (20) en fonction de l'information reçue par ledit capteur d'usure (80).

3. Timonerie selon la revendication 1, caractérisée en ce que le calculateur (40) pilote la mise en route des moyens moteurs (20) en fonction du capteur d'usure (80) dans des situations programmées, telles que la mise en route ou l'arrêt du moteur.

4. Timonerie selon l'une quelconque des revendications 1 à 3, caractérisée en ce que ledit point d'appui mobile est mobile dans les deux sens suivant une course définie entre deux positions limites sous l'action desdits moyens de commande (200,300), et en ce que ladite course définie évolue à chaque rattrapage d'usure effectuée en fonction du capteur d'usure (80).

5. Timonerie selon l'une quelconque des revendications 1 à 4, caractérisée en ce que au moins un capteur de position d'actionnement (50,52) est associé à l'organe de commande (8), en ce que ledit calculateur (40) reçoit les informations dudit capteur de position pour commander lesdits moyens moteurs (20), de sorte que par enfoncement ou relâchement de l'organe de commande (8) par le conducteur et action de l'organe de commande (8) sur son capteur de position d'actionnement associé (50,52), le calculateur (40) pilote la mise en route des moyens moteurs (20) pour déplacement dudit point d'appui mobile d'une position limite à une autre dans un premier sens ou dans un deuxième sens suivant l'action exerçée par le conducteur sur l'organe de commande (8), et que ledit point d'appui mobile est fixe par l'intermédiaire des moyens de commande (200) lorsque, d'une part, le conducteur actionne manuellement l'organe de commande (8) et, d'autre part, ledit capteur de position d'actionnement (50,52) n'émet pas de signal capable d'engendrer la mise en route des moyens moteurs (20).

6. Timonerie selon l'une quelconque des revendications précédentes, caractérisée en ce que les moyens de commande (200) sont irréversibles.

7. Timonerie selon la revendication 6, caractérisée en ce que les moyens moteurs (20) comportent un moteur électrique avec une vis sans fin (21) engrenant avec des pignons (31,32) d'une transmission (30,300) irréversible.

8. Timonerie selon la revendication 7, caractérisée en ce que les pignons (31,32) engrènent avec une crémaillère (34) pratiquée dans un coulisseau (33) mobile axialement par rapport à un boîtier (22) à la faveur d'un alésage (37) que présente ledit boîtier (22).

9. Timonerie selon la revendication 7, caractérisée en ce que les pignons (31,32) engrènent avec un secteur denté (90) monté pivotant par rapport au boîtier.

10. Timonerie selon l'une quelconque des revendications précédentes, du genre comportant un câble (1) et une gaine (2), ledit câble ayant deux points d'extrémités (10,11) et traversant la gaine (2), caractérisée en ce que le point d'appui mobile (11) est le point d'extrémité du câble (1) opposé à celui associé à l'organe de commande (8).

11. Timonerie selon l'une quelconque des revendications précédentes, du genre comportant un câble (1) et une gaine (2) interposée entre deux points portés par une partie fixe du véhicule, ledit câble (1) traversant ladite gaine (2), caractérisée en ce que le point d'appui mobile est l'un des points associé à l'extrémité de la gaine (2).

12. Timonerie selon l'une quelconque des revendications précédentes, caractérisée en ce que l'organe de commande est une pédale, et l'organe de manoeuvre une butée de débrayage (3) actionnée par une fourchette de débrayage (4).

## Patentansprüche

1. Gestänge für die Kraftübertragung von Kraftfahrzeugen, geeignet zur Gewährleistung einer Verbindung zwischen einem Bedienungsorgan (8) und einem Betätigungsorgan (3) für eine Ausrückvorrichtung einer Kupplung, enthaltend Antriebsmittel (20), einen mechanischen Teil mit wenigstens einem Kraftübertragungselement und Auflagepunkten (7, 11, 12, 13), die von einem feststehenden Teil am Kraftfahrzeug getragen werden, wobei einerseits das Betätigungsorgan (3) einer Reibungskupplung zugeordnet ist, die eine Kupplungsscheibe (16) mit Reibbelägen (16') aufweist, die zwischen der Druckplatte (15) und dem Schwungrad (17) an der genannten Kupplung eingespannt werden können, und bei der andererseits ein Rechner (40) für die Einschaltregelung der Antriebsmittel (20) entsprechend einer Information vorgesehen ist, die aus einem Belastungsdetektor (80) im Kraftübertragungselement stammt, **dadurch gekennzeichnet**, daß einer der genannten Auflagepunkte (7, 11, 12, 13) des Gestänges unter Einwirkung von Steuermitteln (200) direkt oder indirekt beweglich ist, die die genannten Antriebsmittel (20) und eine Kraftübertragung (30, 300) enthalten, die zwischen den genannten Antriebsmitteln (20) und dem genannten beweglichen Auflagepunkt wirksamen werden, daß der genannte Geber (80) ein Verschleißgeber ist, der dafür vorgesehen ist, eine zusätzliche Belastung im Gestänge zu erfassen, wobei der genannte Rechner (40) die Informationen vom genannten Verschleißgeber (80) empfängt, um die genannten Antriebsmittel (20) zu betätigen, und daß das Kraftübertragungselement von der genannten Kraftübertragung verschieden ist, so daß der genannte Geber (80) an den Rechner (40) ein Signal sendet, wenn vom Verschleißgeber (80) eine solche zusätzliche Belastung im Gestänge festgestellt wird, um die genannten Antriebsmittel (20) in Gang zu setzen und den beweglichen Auflagepunkt (7, 11, 12, 13) zu verschieben, damit es zu einem Ausgleich des Verschleißes kommt.

2. Gestänge nach Anspruch 1, **dadurch gekennzeichnet**, daß ein Freiweggeber (51, 52) vorgesehen ist, um die freie Stellung des Bedienungsorgans (8) zu erfassen, wenn der Fahrer nicht manuell auf das Bedienungsorgan einwirkt, so daß der genannte Geber (51, 52) an den Rechner (40) ein Signal sendet, um die genannten Antriebsmittel (20), während sich das Bedienungsorgan in der freien Stellung befindet, entsprechend den vom genannten Verschleißgeber (80) empfangenen Informationen in Gang zu setzen.

3. Gestänge nach Anspruch 1, **dadurch gekennzeichnet**, daß der Rechner (40) das Einschalten der Antriebsmittel (20) entsprechend dem Verschleißgeber (80) in programmierten Situationen wie zum Beispiel beim Ingangsetzen oder Abstellen des Motors regelt.

4. Gestänge nach einem der Ansprüche 1 bis 3, **dadurch gekennzeichnet**, daß der genannte bewegliche Auflagepunkt in beiden Richtungen entsprechend einem Hub beweglich ist, der zwischen zwei Endpositionen unter Einwirkung der genannten Steuermittel (200, 300) begrenzt ist, und daß der so festgelegte Hubweg bei jedem Ausgleich des Verschleißes, der entsprechend dem Verschleißgeber (80) vorgenommen wird, zum Tragen kommt.

5. Gestänge nach einem der Ansprüche 1 bis 4, **dadurch gekennzeichnet**, daß dem Bedienungsorgan (8) wenigstens ein Betätigungsweggeber (50, 52) zugeordnet ist, daß der genannte Rechner (40) die Informationen vom genannten Weggeber empfängt, um die genannten Antriebsmittel (20) zu betätigen, so daß beim Betätigen oder Loslassen des Bedienungsorgans (8) durch den Fahrer und Einwirkung des Bedienungsorgans (8) auf seinen zugehörigen Betätigungsweggeber (50, 52) der Rechner (40) das Ingangsetzen der Antriebsmittel (20) regelt, um den genannten beweglichen Auflagepunkt von einer Endposition in eine andere in einer ersten Richtung oder in einer zweiten Richtung entsprechend der vom Fahrer auf das Bedienungsorgan (8) ausgeübten Kraft zu verschieben, und daß der genannte bewegliche Auflagepunkt mit Hilfe der Steuermittel (200) festgesetzt ist, wenn einerseits der Fahrer von Hand das Bedienungsorgan (8) betätigt und andererseits der genannte Betätigungsweggeber (50, 52) kein Signal aussendet, welches das Einschalten der Antriebsmittel 820) bewirken könnte.

6. Gestänge nach einem der vorherigen Ansprüche, **dadurch gekennzeichnet**, daß die Steuermittel (200) irreversibel sind.

7. Gestänge nach Anspruch 6, **dadurch gekennzeichnet**, daß die Antriebsmittel (20) einen Elektromotor mit einer Schnecke (21) aufweisen, die mit Ritzeln (31, 32) einer irreversiblen Kraftübertragung (30, 300) in Eingriff stehen.

8. Gestänge nach Anspruch 7, **dadurch gekennzeichnet**, daß die Ritzel (31, 32) mit einer Zahnstange (34) in Eingriff stehen, die in einem Gleitstück (33) angebracht ist, welches im Verhältnis zu einem Gehäuse (22) dank einer im genannten Gehäuse (22) vorhandenen Bohrung (37) axial beweglich ist.

9. Gestänge nach Anspruch 7, **dadurch gekennzeichnet**, daß die Ritzel (31, 32) mit einem Zahnsegment (90) in Eingriff stehen, welches im Verhältnis zum Gehäuse drehbar angebracht ist.

10. Gestänge nach einem der vorherigen Ansprüche, enthaltend ein Kabel (1) und einen Schlauch (2), wobei das genannte Kabel zwei Endpunkte (10, 11) besitzt und durch den Schlauch (2) hindurch verläuft, **dadurch gekennzeichnet**, daß der bewegliche Auflagepunkt (11) der Endpunkt des Kabels (1) ist, der dem Endpunkt des Bedienungsorgans (8) gegenüberliegt.

11. Gestänge nach einem der vorherigen Ansprüche, enthaltend ein Kabel (1) und einen Schlauch (2), der zwischen zwei Punkten an einem feststehenden Teil des Fahrzeugs eingesetzt ist, wobei das genannte Kabel (1) durch den genannten Schlauch (2) hindurch verläuft, **dadurch gekennzeichnet**, daß der bewegliche Auflagepunkt einer der Punkte ist, die dem Ende des Schlauchs (2) verbunden sind.

12. Gestänge nach einem der vorherigen Ansprüche, **dadurch gekennzeichnet**, daß das Bedienungsorgan ein Pedal ist und daß es sich bei dem Betätigungsorgan um ein Kupplungsausrücklager (3) handelt, welches durch eine Ausrückgabel (4) betätigt wird.

## Claims

1. A force transmission linkage for motor vehicles, for coupling together a control member (8) and a manoeuvring member (3) of a declutching means for a clutch, and being of the kind comprising motor means (20), a mechanical part having at least one force transmitting element and application points (7, 11, 12, 13) which are carried by a fixed part of the motor vehicle, in which, firstly, the manoeuvring member (3) is associated with a friction clutch including a friction disc (16) with friction liners (16') adapted to be gripped between the pressure plate (15) and the reaction plate (17) which form part of the said clutch, and secondly, a computer (40) is provided for controlling starting of the motor means (20) in response to an information signal from a strain detector (80) in the force transmission element, characterised in that one of the said application points (7, 11, 12, 13) of the linkage is directly or indirectly movable under the action of control means (200), comprising motor means (20) together with a transmission (30, 300) working between the said motor means (20) and the said movable application point, in that the said sensor (80) is a wear sensor which is arranged to detect a supplementary strain in the linkage, with the said computer (40) receiving the information signals from the said wear sensor (80) so as to control the said motor means (20), and in that the force transmission element is distinct from the said transmission, in such a way that the said sensor (80) transmits a signal to the computer (40) when a said supplementary strain in the linkage is detected by the wear sensor (80), so as to start the said motor means (20) and to displace the movable application point (7, 11, 12, 13), whereby to take up wear.

2. A linkage according to Claim 1, characterised in that a free position sensor (51, 52) is provided for the purpose of detecting the free position of the control member (8) when the driver is exerting no manual force on the control member, so that the said sensor (51, 52) transmits a signal to the computer (40), whereby, in the free position of the control member, to start the said motor means (20) in response to the information signal received by the said wear sensor (80).

3. A linkage according to Claim 1, characterised in that the computer (40) controls the starting of the motor means (20) in response to the wear sensor (80) in programmed situations such as starting or stopping of the engine.

4. A linkage according to any one of Claims 1 to 3, characterised in that the said movable application point is movable, under the action of the said control means (200, 300), in both directions along a path which is defined between two limiting positions and in that the said defined path is extended each time wear is taken up in response to the wear sensor (80).

5. A linkage according to any one of Claims 1 to 4, characterised in that at least one actuation position sensor (50, 52) is associated with the control member (8), in that the said computer (40) receives the information signals from the said position sensor so as to control the said motor means (20), in such a way that, when the control member (8) is pushed or released by the driver and through the action of the control member (8) on its associated actuation position sensor (50, 52), the computer (40) controls starting of the motor means (20) so as to displace the said movable application point from a limiting position to another position, in a first direction or in a second direction depending on following the action exerted by the driver on the control member (8), and so that the said movable application point is fixed by means of the control means (200), firstly when the driver actuates the control member (8) manually and secondly when the said actuation position sensor (50, 52) emits no signal capable of causing the motor means (20) to be started.

6. A linkage according to any one of the preceding Claims, characterised in that the control means (200) are irreversible.

7. A linkage according to Claim 6, characterised in that the motor means (20) comprise an electric motor with a worm (21), which meshes with worm wheels (31, 32) of an irreversible transmission (30, 300).

8. A linkage according to Claim 7, characterised in that the worm wheels (31, 32) mesh with a rack (34), formed in a sliding member (33) which is movable, axially with respect to a housing (22), in a bore (37) of the said housing (22).

9. A linkage according to Claim 7, characterised in that the worm wheels (31, 32) mesh with a toothed sector (90) which is mounted for pivoting movement with respect to the housing.

10. A linkage according to any one of the preceding Claims, of the kind comprising a cable (1) and a sheath (2), the said cable having two end points (10, 11) and passing through the sheath (2), characterised in that the movable application point (11) is the end point of the cable (1) opposite to that which is associated with the control member (8).

11. A linkage according to any one of the preceding Claims, of the kind including a cable (1) and a sheath (2) interposed between two points carried by a fixed part of the vehicle, with the said cable (1) passing through the said sheath (2), characterised in that the movable application point is one of the points associated with the end of the sheath (2).

12. A linkage according to any one of the preceding Claims, characterised in that the control member is a pedal, and the manoeuvring member is a clutch release bearing (3) which is actuated by a declutching fork (4).
